# FASCICULE DE BREVET EUROPEEN

(11) **EP 1 643 181 B1**
(45) Date de publication et mention de la délivrance du brevet: **06.04.2011**
(21) Numéro de dépôt: 05108629.6
(22) Date de dépôt: 19.09.2005
(51) Int. Cl.: F17C 1/00

(54) **Installation de fourniture de combustible gazeux et séquence de démarrage d'une telle installation**
Vorrichtung zur Gasbrennstoffbereitstellung und Startsequenz einer solchen Installation
Installation to deliver gaseous fuel and start sequence of such an installation

(30) Priorité: 30.09.2004 FR 0452218
(43) Date de publication de la demande: 05.04.2006
(73) Titulaire: STX FRANCE S.A., 44600 Saint Nazaire (FR)
(72) Inventeur: Renaud, Jean-Yves, 44380 Pornichet (FR); Lorang, M. Mathieu, 44320 Saint Pere en Retz (FR)
(74) Mandataire: Branger, Jean-Yves

(56) Documents cités:
- EP-A- 0 812 980
- EP-A- 1 348 620
- WO-A-98/59164
- FR-A- 2 722 760
- US-A- 5 243 821
- US-A- 5 520 000

## Description

La présente invention concerne un procédé de démarrage d'une installation pour la fourniture de combustible gazeux à un ensemble de production énergétique d'un navire de transport de gaz liquéfié à partir du contenu d'au moins une cuve dudit navire.

Dans les navires de transport de gaz liquéfié connus tels que les méthaniers, l'ensemble de production d'énergie comprend une chaudière de production de vapeur alimentant une turbine entraînant l'hélice ou des moteurs thermiques entraînant des alternateurs alimentant des moteurs électriques accouplés à l'hélice. Dans les deux cas l'ensemble de production énergétique utilise comme combustible le gaz de la cargaison. Dans les cuves qui sont isolées thermiquement, le méthane est à l'état liquide et la phase gazeuse située au-dessus du niveau liquide est à une pression voisine de 1 à 3 bars absolus.

L'alimentation de l'ensemble de production d'énergie provient au moins en partie de la phase gazeuse au-dessus du liquide, aspirée directement au-dessus de la surface par un compresseur axial ou centrifuge alimentant, sous la pression requise, les brûleurs de la chaudière ou les moteurs thermiques. Une autre partie de l'alimentation provient du gaz en phase liquide pompé et mis en phase gazeuse, lorsque la seule évaporation naturelle est insuffisante pour alimenter les besoins énergétiques du navire.

Le document US 5 520 000 a pour objet un système de compression d'un gaz cryogénique, dans lequel ledit gaz est fortement comprimé tout en étant maintenu à basse température. Il comporte un dispositif de compression composé de deux compresseurs montés en série, ayant chacun sa vitesse propre de fonctionnement. Ce système connu est muni d'un système de sécurité d'arrêt en cas d'échauffement au-delà d'un seuil de température déterminé, ainsi que d'un dispositif antipompage.

Le document US 5 243 821 décrit un procédé et une installation servant à délivrer un gaz d'une façon continue, à l'intérieur d'une plage de débit étendue. Cette installation connue comporte un compresseur-pompe, du type à piston alternatif, apte à comprimer un fluide à basse température, liquide et/ou gazeux, provenant d'un conteneur de stockage. Il y est indiqué que le compresseur-pompe est susceptible d'être entraîné avec une vitesse variable.

Le brevet du demandeur FR 2 837 783 décrit une installation pour la fourniture de combustible gazeux à un ensemble de production énergétique d'un navire de transport de gaz liquéfié, à partir du contenu d'au moins une cuve du navire. La cuve contient du gaz liquéfié et du gaz en phase vapeur au-dessus d'une surface de séparation liquide-vapeur. Cette disposition comprend, entre autre, un compresseur entraîné par un moteur et dont l'entrée aspire le gaz en phase vapeur dans la cuve au-dessus de la surface liquide, la sortie du compresseur débitant dans un collecteur d'alimentation de l'ensemble de production énergétique. Ce type de compresseur est équipé d'un dispositif de sécurité qui provoque son arrêt si la température augmente au-delà d'un certain seuil et d'un système anti-pompage dont le but est de faire fonctionner le compresseur dans une plage débit/pression déterminée par l'intermédiaire d'un dispositif de contrôle du débit et de la pression associé à une vanne de déchargement pilotée par les paramètres de pression et de débit du compresseur et qui relie la sortie du compresseur à son entrée. Ce système permet d'éviter une surpression dans le compresseur, c'est à dire qu'en cas d'élévation de la pression dans le compresseur, la vanne s'ouvre automatiquement et le gaz est redirigé de la sortie vers l'entrée du compresseur afin de modifier les paramètres débit/pression du compresseur.

Dans ce qui suit les termes amont et aval sont relatifs au flux de circulation du gaz de sa source, la cuve, vers sa destination, l'ensemble de production énergétique ou le moyen d'oxydation.

Le démarrage d'une telle installation comprenant un moteur thermique ou tout système de production énergétique demandant une pression supérieure à 3 bars absolus, après un temps d'arrêt suffisamment long, pose problème. Après un temps d'arrêt, les tuyauteries d'alimentation en gaz peuvent se trouver au moins en partie à la température ambiante. Lors du démarrage, le gaz venant de la cuve est réchauffé par les tuyauteries en amont du compresseur et atteint une température proche de la température ambiante, par exemple 20°C. La compression de ce gaz qui se trouve alors à une température supérieure à la température normale de fonctionnement amène ledit gaz à une température élevée, par exemple supérieure à 150 °C donc très largement supérieure à la température que peut supporter l'installation et cela risque de provoquer une détérioration des lignes d'alimentation en aval du compresseur ou l'arrêt du compresseur par son système de sécurité. Ce risque ne se présente que pendant une durée limitée dans le temps puisque le gaz qui provient des cuves à une température largement inférieure à la température ambiante va refroidir progressivement l'installation.

Il est nécessaire d'éviter ce risque et donc de maintenir l'installation, durant la période de démarrage, à une température inférieure à la température limite maximale supportée par les tuyauteries et le compresseur.

Une solution évidente consiste à forcer le gaz à contourner le compresseur et à diriger directement le gaz de la cuve vers un moyen d'oxydation. Le gaz froid en provenance de la cuve refroidit alors les lignes d'alimentation. Cette solution présente des désavantages : il est nécessaire de monter la cuve en pression et de disposer d'un moyen d'oxydation adapté qui puisse travailler à cette pression. Il faut de plus prévoir les conduites servant à court-circuiter le compresseur. Ce qui génère des contraintes supplémentaires de conception et de coûte de l'ensemble de la ligne d'alimentation.

Une autre solution consiste à disposer un moyen de refroidissement en aval du compresseur. Cette solution a pour inconvénient de nécessiter une installation supplémentaire qui génère des contraintes de conception et des coûts supplémentaires. De plus cette solution ne résout pas le problème de la température dans le compresseur qui, si elle est trop élevée, provoque l'arrêt de ce dernier par son système de sécurité ou nuit à son bon fonctionnement.

L'invention vise à remédier aux inconvénients des solutions évidentes précitées. C'est à dire à fournir un procédé de démarrage des lignes d'alimentation en gaz d'une unité de production d'énergie d'un navire de transport de gaz liquéfié alimentée à partir du contenu d'au moins une des cuves du navire. Cette méthode propose de limiter les coûts supplémentaires et de ne créer aucune contrainte de conception supplémentaire et d'éviter les arrêts provoqués par le dispositif de sécurité du compresseur.

A cet effet l'invention a pour objet un procédé pour la fourniture de combustible gazeux à un ensemble de production d'énergie à bord d'un navire de transport de gaz liquéfié, à partir du contenu d'au moins l'une des cuves dudit navire, via un compresseur muni d'un système de sécurité d'arrêt en cas d'échauffement supérieur à un seuil de température et d'un système anti-pompage, caractérisée en ce qu'on utilise un compresseur de type à vitesse variable, et en ce que, durant la séquence de démarrage de l'installation, le compresseur fonctionne à une vitesse inférieure à sa vitesse de fonctionnement normale, fonction de la température en entrée du compresseur et telle que la température en sortie du compresseur reste inférieure à une température critique pour la tenue en service de l'installation.

L'appellation "compresseur à vitesse variable" recouvre les compresseurs munis d'un variateur de vitesse dont la vitesse peut prendre une multitude de valeurs réelles comprises entre une valeur nulle et une valeur maximum dite de fonctionnement normal et les compresseurs dont la vitesse peut prendre un nombre fini de valeurs comprises entre une valeur nulle et une valeur maximale dite de fonctionnement normal. L'utilisation d'un compresseur à vitesse variable entraîne peu de contrainte supplémentaire de conception.

Ce procédé de démarrage permet d'obtenir dans un temps relativement court le démarrage de l'installation sans recourir à des moyens supplémentaires qui ne seraient dédiés qu'à cette tache. De plus la température en sortie de compresseur reste ainsi en dessous de sa valeur critique préservant l'installation de toutes dégradations dues à une température trop élevée.

Selon une caracteristique particulière possible de l'invention, on fait varier la vitesse du compresseur pendant la séquence de démarrage. Il est ainsi possible d'augmenter progressivement la vitesse du compresseur pour réduire encore la durée de la séquence.

Selon une caractéristique particulière possible de l'invention, le gaz sorti du compresseur pendant la séquence de démarrage est dirigé vers un moyen d'oxydation via une vanne. En dirigeant le gaz vers le moyen d'oxydation l'ensemble de production d'énergie est protégé des risques liés à l'arrivé de gaz trop chaud dans ledit ensemble.

Selon une caractéristique particulière possible de l'invention, on mesure la température dans une conduite en entrée du compresseur par un moyen de mesure. Connaissant les caractéristiques du compresseur, on peut déduire de cette mesure la température dans le compresseur et en sortie du compresseur, la vitesse du compresseur peut alors être modifiée en fonction de la température mesurée ce qui permet de mieux maîtriser le risque d'arrêt du compresseur par ses dispositifs de sécurité.

Selon une réalisation avantageuse de l'invention, on refroidit le combustible gazeux par un moyen de refroidissement placé en amont du compresseur. Ce moyen de refroidissement permet lors du fonctionnement normal de l'installation de réguler la température en entrée du compresseur et lors de la phase de démarrage de l'installation de diminuer encore la durée de la séquence de démarrage.

Selon une caractéristique particulière possible de l'invention, les gaz chauds issus du système anti-pompage du compresseur sont dirigés vers l'entrée d'un moyen de refroidissement placé sur la conduite en amont du compresseur. Le risque de voir le compresseur s'arrêter en raison d'une température trop élevée après que le système anti-pompage ait renvoyé du gaz chaud de la sortie du compresseur vers son entrée est alors diminué puisque ces gaz chauds sont refroidis avant d'entrer à nouveau dans le compresseur.

Selon une caractéristique particulière possible de l'invention, le moyen de refroidissement utilise du gaz en phase liquide provenant de la cuve par une conduite annexe,

Selon une caractéristique particulière possible de l'invention, la séquence de démarrage s'achève quand la température en entrée du compresseur atteint une valeur suffisamment basse dite température limite de sécurité pour garantir la sécurité de l'installation en fonctionnement normal. Une fois cette température atteinte l'installation peut fonctionner normalement sans risque, il est alors notamment possible de diriger le gaz vers le moyen de production d'énergie et de passer le compresseur à sa vitesse de fonctionnement normal.

La lecture de la description ci après, donnée à titre d'exemple, aidera à la compréhension de l'invention. Cette description est faite en références aux dessins annexés dans lesquels:
- La figure 1 représente schématiquement une installation la plus simple pouvant être démarrée selon le procédé
- La figure 2 montre schématiquement une disposition préférée d'installation pouvant être démarrée selon l'invention.

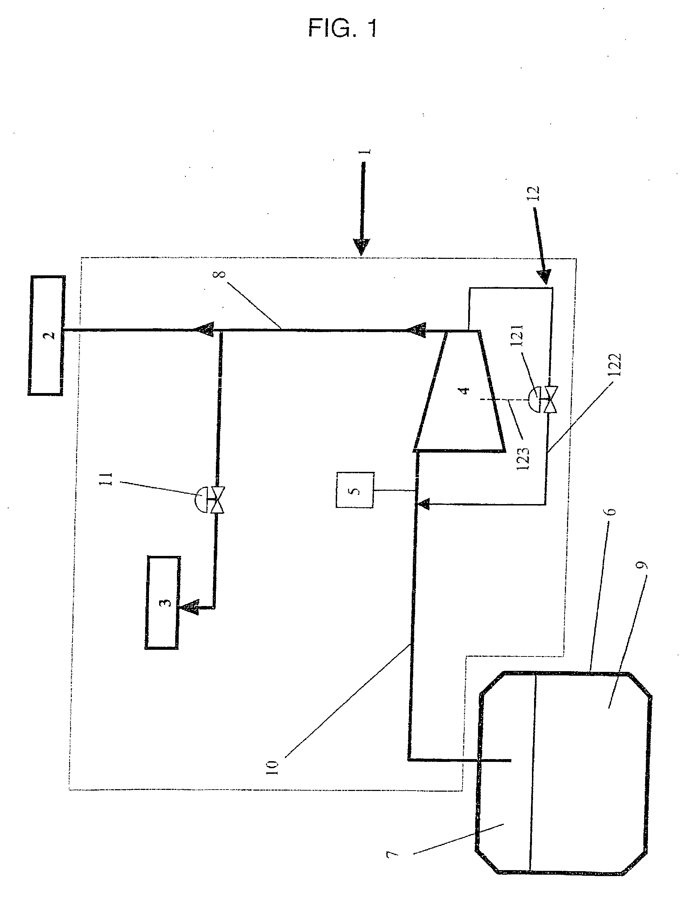

La figure 1 présente une configuration simplifiée d'une installation 1 d'alimentation en combustible d'un ensemble de production d'énergie 2 à bord d'un navire méthanier comprenant au moins une cuve 6 qui contient un volume de gaz liquéfié 9 et un volume de gaz en phase vapeur 7. C'est le gaz en phase vapeur 7 qui est principalement utilisé pour alimenter l'ensemble de production d'énergie 2 et quand l'évaporation naturelle est insuffisante, du gaz en phase liquide est pompé et mis en phase vapeur via un évaporateur, la pompe et l'évaporateur n'étant ici pas représentés. Le gaz en provenance de la cuve 6 passe par une conduite 10 puis par un compresseur 4 avant d'arriver dans un collecteur 8 et d'être diriger soit vers l'ensemble de production d'énergie 2, soit vers un moyen d'oxydation 3 via une vanne 11. La température du gaz en entrée du compresseur 4 peut être mesurée et lue par un opérateur à l'aide d'un moyen de mesure et de lecture 5 de ladite température. Un système de sécurité 12 anti-pompage protège le compresseur 4 de toute anomalie du couple débit/pression. Ce système comprend une conduite 122 qui relie la sortie du compresseur 4 à son entrée, sur cette conduite 122 est placée une vanne 121 pilotée par le compresseur à l'aide d'un moyen de commande automatique 123. En cas d'anomalie du couple débit/pression, cette vanne 121 est apte à renvoyer une partie du gaz qui sort du compresseur 4 vers l'entrée dudit compresseur.

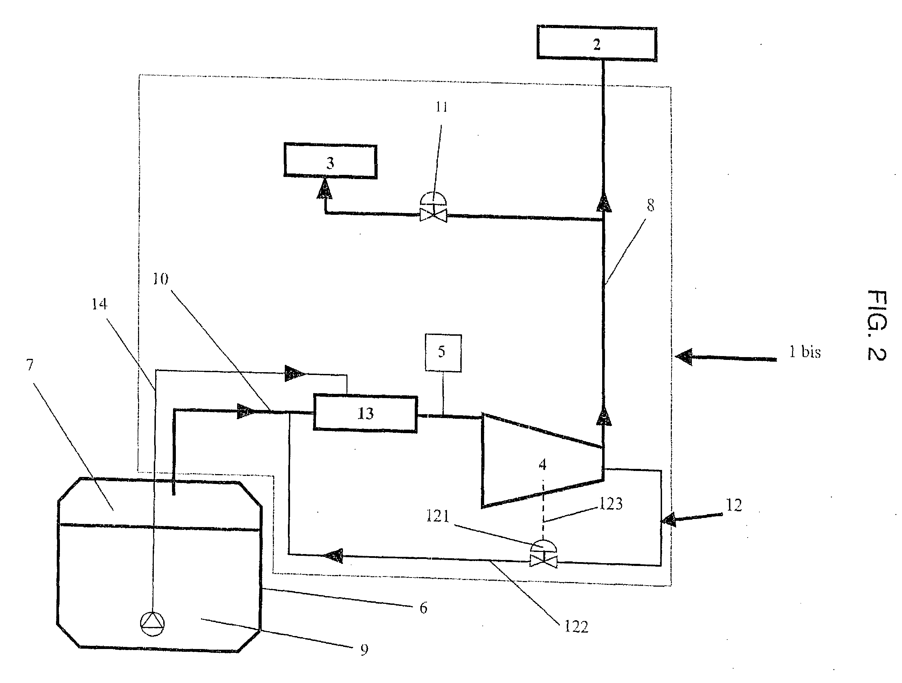

La figure 2 montre une configuration préférée d'une installation 1bis de fourniture de gaz à l'ensemble de production d'énergie 2. Cette configuration diffère de celle présentée figure 1 par la présence d'un moyen de refroidissement 13 placé en amont du compresseur 4 sur la conduite 10 qui joue un rôle dans la régulation de l'installation en fonctionnement normal et qui, par exemple, utilise le gaz en phase liquide en provenance de la cuve 6 par une conduite 14 comme moyen de refroidissement. Le système 12 anti-pompage relie alors la sortie du compresseur 4 à l'entrée du moyen de refroidissement 13 ce qui offre une sécurité supplémentaire au compresseur grâce au refroidissement des gaz chauds.

Un exemple de procédure de démarrage de l'installation 1, 1bis va être décrit plus en détail. Un opérateur démarre le compresseur 4 à une vitesse inférieure à sa vitesse de fonctionnement normale, par exemple 50% de la vitesse de fonctionnement normale. Du gaz est alors aspiré de la cuve 6 vers le compresseur 4 via la conduite 10 qui est à la température ambiante. Cette conduite 10 réchauffe le gaz jusqu'à une température proche de la température ambiante soit par exemple environ 20°C puis la compression du gaz l'amène à une température plus élevée par exemple 60°C au lieu des 150°C obtenu avec le compresseur à 100% de sa vitesse de fonctionnement normale. Le gaz dans la cuve 6 est à une température très inférieure à l'ambiante, il va donc progressivement refroidir la conduite 10 et de même la température dans le compresseur 4 et dans le collecteur 8 va progressivement diminuer. L'opérateur connaît en temps réel la température du gaz en entrée du compresseur 4 grâce au moyen de mesure 5. Lorsque cette température est suffisamment descendue, c'est à dire par exemple jusqu'à un seuil de -80°C / -100°C, on sait que la température en sortie du compresseur 4 ne représente plus un danger pour l'installation 1, 1 bis et l'opérateur augmente la vitesse du compresseur 4 jusqu'à sa vitesse de fonctionnement normale. L'installation 1 bis comprend avantageusement un moyen de refroidissement 13 placé en amont du compresseur 4 sur la conduite 10 grâce auquel le temps nécessaire à atteindre le seuil précité de température en entrée du compresseur 4 est encore réduit. De plus dans une installation 1 bis comprenant avantageusement un moyen de refroidissement 13 sur la conduite 10, on relie le système de sécurité anti - pompage 12 à l'entrée du moyen de refroidissement 13. Les gaz chauds issus du compresseur 4 par ce système 12 sont alors refroidis avant d'entrer à nouveau dans le compresseur 4, limitant alors le risque de montée en température et d'arrêt du compresseur 4.

Par ailleurs durant la séquence de démarrage, c'est à dire jusqu'à ce que la température en entrée du compresseur 4 ait suffisamment baissé et tant que le compresseur 4 ne fonctionne pas à une vitesse normale le gaz est dirigé du collecteur 8 vers un moyen d'oxydation 3 grâce à une vanne 11 afin de protéger l'ensemble de production d'énergie 2 des risques liés à l'arrivé de gaz trop chauds dans ce même ensemble 2. Le gaz est ensuite dirigé vers l'ensemble de production d'énergie 2 et l'installation 1, 1 bis fonctionne normalement.

L'homme de métier peut envisager de maintenir la vitesse du compresseur 4 par exemple à 50% de sa vitesse de fonctionnement normale durant toute la séquence de démarrage ou d'augmenter progressivement cette vitesse tout en s'assurant que la température en sortie du compresseur 4 reste inférieure à sa valeur critique, dans le but de réduire encore la durée du démarrage de l'installation 1, 1 bis. Il est également envisageable, bien que cela semble moins avantageux au regard d'un des résultats recherchés qui est de limiter le risque d'arrêt du compresseur 4 par ses dispositifs de sécurité, de mesurer la température en sortie du compresseur 4 au lieu de la température en entrée dudit compresseur. Il est également envisageable d'automatiser la séquence de démarrage.

## Revendications

1. Procédé pour la fourniture de combustible gazeux à un ensemble de production d'énergie (2) à bord d'un navire de transport de gaz liquéfié à partir du contenu d'au moins l'une des cuves (6) dudit navire, via un compresseur (4) muni d'un système de sécurité d'arrêt en cas d'échauffement supérieur à un seuil de température et d'un système anti-pompage (12), **caractérisé en ce que** l'on utilise un compresseur (4) de type à vitesse variable, et **en ce que**, durant sa séquence de démarrage, il fonctionne à une vitesse inférieure à sa vitesse de fonctionnement normale, fonction de la température en entrée du compresseur (4) et telle que la température en sortie du compresseur (4) reste inférieure à une température critique pour la tenue en service de l'installation (1, 1 bis).

2. Procédé selon la revendication précédente, **caractérisée en ce qu'**on fait varier la vitesse du compresseur (4) pendant la séquence de démarrage.

3. Procédé selon la revendication 1 ou 2, **caractérisée en ce que** le gaz sorti du compresseur 4 pendant la séquence de démarrage est dirigé vers un moyen d'oxydation (3) via une vanne (11).

4. Procédé selon l'une des revendications 1 à 3, **caractérisée en ce que** l'on mesure la température dans une conduite (10) en entrée du compresseur (4) par un moyen de mesure (5).

5. Procédé selon l'une des revendications 1 à 4, **caractérisée en ce que** l'on refroidit le combustible gazeux par un moyen de refroidissement (13) placé en amont du compresseur.

6. Procédé selon la revendication 5, **caractérisée en ce que** les gaz chauds issus du système anti-pompage (12) du compresseur (4) sont dirigés vers l'entrée du moyen de refroidissement (13) placé en amont du compresseur (4) sur la conduite (10).

7. Procédé de démarrage selon la revendication 5 ou 6, **caractérisée en ce que** le moyen de refroidissement (13) utilise du gaz en phase liquide (9) provenant de la cuve (6) par une conduite (14).

8. Procédé de démarrage selon l'une des revendications 1 à 7, **caractérisée en ce que** la séquence de démarrage s'achève quand la température en entrée du compresseur (4) atteint une valeur de -80°C.

## Claims

1. A method for providing combustible gas to an energy production assembly (2) onboard a liquefied gas transport ship, from the contents of at least one of the tanks (6) of said ship, via a compressor (4) provided with a security system for stopping it in the case of heating above a temperature threshold and with an anti-surging system (12), **characterized in that** a compressor (4) of the variable speed type is used and **in that**, during its starting sequence, it operates at a speed below its normal operating speed, depending on the temperature at the inlet of the compressor (4) and such that the temperature at the outlet of the compressor (4) remains below a critical temperature for maintaining the installation (1, 1bis) in operation.

2. The method according to the preceding claim, **characterized in that** the speed of the compressor (4) is varied during the starting sequence.

3. The method according to claim 1 or 2, **characterized in that** the gas exiting from the compressor (4) during the starting sequence is directed towards an oxidation means (3) via a valve (11).

4. The method according to any of claims 1 to 3, **characterized in that** the temperature is measured in a conduit (10) at the inlet of the compressor (4) by a measuring means (5).

5. The method according to any of claims 1 to 4, **characterized in that** the combustible gas is cooled by a cooling means (13) placed upstream from the compressor.

6. The method according to claim 5, **characterized in that** the hot gases from the anti-surging system (12) of the compressor (4) are directed towards the inlet of the cooling means (13) placed upstream from the compressor (4) on the conduit (10).

7. The starting method according to claim 5 or 6, **characterized in that** the cooling means (13) uses gas in the liquid phase (9) flowing from the tank (6) through a conduit (14).

8. The starting method according to any of claims 1 to 7, **characterized in that** the starting sequence is completed when the temperature of the compressor attains a value of -80°C.

## Patentansprüche

1. Verfahren zur Bereitstellung eines gasförmigen Brennstoffs an einen Energieherstellungskomplex (2) an Bord eines Transportschiffs für Flüssiggas aus dem Inhalt wenigstens eines der Tanks (6) des Schiffs über einen Kompressor (4), der mit einem Sicherheitsanhaltesystem im Fall einer Erwärmung über eine Temperaturschwelle und einem Antipumpsystem (12) versehen ist, **dadurch gekennzeichnet, dass** ein Kompressor (4) vom Typ mit variabler Geschwindigkeit verwendet wird und dass er während seiner Startsequenz mit einer Geschwindigkeit kleiner als seine Geschwindigkeit bei normalem Betrieb in Abhängigkeit der Temperatur am Eingang des Kompressors (4) arbeitet, und dass die Temperatur am Ausgang des Kompressors (4) kleiner als eine kritische Temperatur für das Betriebsverhalten der Installation (1, 1 bis) bleibt.

2. Verfahren gemäß dem vorhergehenden Anspruch, **dadurch gekennzeichnet, dass** man die Geschwindigkeit des Kompressors (4) während der Startsequenz variieren lässt.

3. Verfahren gemäß dem Anspruch 1 oder 2, **dadurch gekennzeichnet, dass** das während der Startsequenz aus dem Kompressor (4) ausgetretene Gas in Richtung eines Oxidationsmittels (3) über ein Ventil (11) geleitet wird.

4. Verfahren gemäß einem der Ansprüche 1 bis 3, **dadurch gekennzeichnet, dass** die Temperatur in einer Leitung (10) am Eingang des Kompressors (4) von einem Messmittel (5) gemessen wird.

5. Verfahren gemäß einem der Ansprüche 1 bis 4, **dadurch gekennzeichnet, dass** der gasförmige Brennstoff von einem Kühlmittel (13) gekühlt wird, das dem Kompressor vorgelagert ist.

6. Verfahren gemäß dem Anspruch 5, **dadurch gekennzeichnet, dass** die heißen Gase, die aus dem Antipumpsystem (12) des Kompressors (4) stammen, zum Eingang des dem Kompressor (4) vorgelagerten Kühlmittels (13) auf die Leitung (10) geleitet werden.

7. Startverfahren gemäß dem Anspruch 5 oder 6, **dadurch gekennzeichnet, dass** das Kühlmittel (13) Gas in flüssiger Phase (9) verwendet, das über eine Leitung (14) aus dem Tank (6) kommt.

8. Startverfahren gemäß einem der Ansprüche 1 bis 7, **dadurch gekennzeichnet, dass** die Startsequenz endet, wenn die Temperatur am Eingang des Kompressors (4) einen Wert von -80°C erreicht.
